Europäisches Patentamt

European Patent Office

Office européen des brevets

(11) Numéro de publication: **0 194 904**
**B1**

(12) **FASCICULE DE BREVET EUROPÉEN**

(45) Date de publication du fascicule du brevet:
19.04.89

(51) Int. Cl.⁴: **C 08 G 59/68,** C 09 D 3/58,
C 09 D 3/66, C 09 D 5/00

(21) Numéro de dépôt: 86400190.4

(22) Date de dépôt: 29.01.86

(54) Procédé de préparation des compositions de revêtement en poudre à base d'une résine époxy et d'un polyester carboxyle.

(30) Priorité: 08.02.85 FR 8501771

(43) Date de publication de la demande:
17.09.86 Bulletin 86/38

(45) Mention de la délivrance du brevet:
19.04.89 Bulletin 89/16

(84) Etats contractants désignés:
AT BE CH DE GB IT LI LU NL SE

(56) Documents cité:
EP-A-0 056 356
DE-A-2 641 106
FR-A-1 391 527
FR-A-2 322 172
FR-A-2 377 434
US-A-3 689 444

(73) Titulaire: **NORSOLOR S.A., Tour Aurore Place des Reflets, F-92080 Paris la Defense Cédex 5 (FR)**

(72) Inventeur: **Michel- Dansac, François, 18, rue Voltaire, F-62160 Bully Les Mines (FR)**
Inventeur: **Canard, Pierre, 14, Bisquet St Lazare, F-02300 Autreville (FR)**
Inventeur: **Depland, René, 820, rue du 8 mai, F-62400 Hinges (FR)**
Inventeur: **Juhasz, François, 7, rue Maurice Ravel, F-02300 Chauny (FR)**

(74) Mandataire: **Rieux, Michel, c/o NORSOLOR Service Propriété Industrielle B.P. 57, F-62670 Mazingarbe (FR)**

EP 0 194 904 B1

**Description**

La présente invention concerne un procédé de préparation d'une composition de revêtement en poudre, elle a plus particulièrement pour objet un procédé de fabrication d'une composition à base d'une résine époxy et d'un polyester carboxylé qui peut être thermodurcie rapidement à basse température tout en conduisant à un film présentant de bonnes propriétés mécaniques ainsi qu'un bel aspect de surface.

Les revêtements en poudre ne nécessitent pas la mise en oeuvre de solvants organiques ce qui présente l'avantage de ne pas créer des problèmes de pollution et aussi évite les problèmes d'hygiène et de sécurité lors de la mise en oeuvre. Par ailleurs l'absence de solvant fournit un atout supplémentaire d'économie non négligeable. Malheureusement tous ces avantages sont inhibés par le fait que la mise en oeuvre de ces poudres doit être réalisée à une température de cuisson élevée qui conduit à des films présentant un médiocre aspect de surface ainsi que de faibles propriétés mécaniques. Afin d'élargir le champ d'application des revêtements en poudre, il est souhaitable d'abaisser la température de cuisson ainsi que la durée du traitement thermique afin d'éviter d'une part le brunissement du film, d'autre part la déformation du substrat qui reçoit cette pellicule qui se matérialise par un affaiblissement général des propriétés mécaniques du produit fini. Pour résoudre ces problèmes on peut en réalité jouer uniquement sur trois facteurs la résine, la composition du catalyseur de durcissement, et la nature de l'accélérateur de durcissement.

Les revêtements en poudre connus jusqu'à présent sont constitués d'un mélange mixte formé du système résine époxy-résine polyester carboxylé. Il est bien connu que ces résines réactives grâce à la présence de groupes époxy et de groupes carboxylé peuvent être thermodurcies à l'aide de catalyseurs de durcissement. Les procédés les plus connus jusqu'à présent consistent à mélanger la résine époxy et la résine polyester carboxylé puis à ajouter le catalyseur de durcissement dans le mélange de résines et à soumettre ensuite ce mélange ternaire à un traitement thermique. Comme catalyseur pour la réaction des groupes époxy et des groupes carboxy on connaît plus particulièrement les composés présentant un azote tertiaire choisis parmi la diméthylbenzylamine, la triéthylénediamine et les imidazoles, par example selon FR-A-2 377 434 ainsi que les sels d'ammonium quaternaire tels que le chlorure de tétraéthylammonium. Cependant la mise en oeuvre de ces catalyseurs pour la réalisation de compositions de revêtement en poudre présentent les inconvénients de ne pas abaisser suffisamment la température de durcissement et ainsi de provoquer un brunissement du film de peinture. Par ailleurs ils altèrent fortement la surface du film de peinture tout en conduisant à un revêtement présentant des propriétés mécaniques médiocres.

Le besoin se fait donc sentir de disposer de compositions de revêtement à base de résines époxy résine polyester carboxylé qui puissent être thermodurçies le plus rapidement possible et à une température la moins élevée.

On a maintenant trouvé le moyen de résoudre ces problèmes tout en obtenant des compositions de revêtement en poudre qui conduisent à des revêtements présentant un bel aspect de surface et de bonnes propriétés mécaniques.

La présente invention concerne un procédé de fabrication d'une composition de revêtement en poudre durcissable à chaud constitué d'un mélange de résine époxy et de résine polyester, d'un catalyseur de durcissement et d'un accélérateur de durcissement caractérisé en ce que la composition est fabriquée par mélange de la résine polyester carboxylé contenant le catalyseur de durcissement et l'accélérateur de durcissement du système résine époxy-résine polyester, le mélange étant durçi à chaud, le catalyseur additionné préalablement à la résine polyester carboxylé étant constitué d'acétate de lithium, d'acetate de zinc, d'acétate de magnésium ou de bromure de tétrathylammonium utilisé seul ou en mélange, l'accélérateur additionné préalablement à la résine polyester carboxylé étant constitué de méthyl-2 imidazole, de méthyl-1 imidazole, de phényl-2 imidazole, d'isopropyl-2 imidazole ou d'imidazole.

Selon une autre caractéristique du procédé de l'invention la quantité de catalyseur utilisée dans la résine polyester carboxylé est au plus égale à 2,2 % en poids par rapport au poids de la résine polyester carboxylé, la quantité d'accélérateur étant au plus égale à 0,3 % en poids par rapport au poids de la résine polyester carboxylé.

La mise en oeuvre d'un tel procédé permet d'obtenir des revêtements ne présentant pas de coloration, présentant un bel aspect de surface et de bonnes propriétés mécaniques. Par ailleurs un tel procédé permet d'écourter les temps de cuisson et d'abaisser la température de cuisson. Par ailleurs on a trouvé que l'addition préalable du catalyseur de durcissement et de l'accélérateur de durcissement à la résine polyester carboxylé permettait une meilleure dispersion et de ce fait évite les phénomènes de jaunissement.

La mise en oeuvre du procédé conforme à l'invention consiste à ajouter prealablement pendant la préparation de la résine polyester carboxylé le catalyseur de durcissement et l'accélérateur de durcissement. Le catalyseur de durcissement est constitué d'acétate de lithium, d'acétate de zinc, d'acétate de magnésium ou de bromure de tétraéthylammonium utilisé seul ou en mélange: il est utilisé en quantité au plus égale à 2,2 % en poids et de préférence en quantité inférieure à 0,8 % en poids par rapport au poids du polyester carboxylé. On utilise les produits commerciaux acétate de lithium qui cristallise avec deux molécules d'eau; acétate de magnésium qui cristallise avec quatre molécules d'eau; l'accélérateur de durcissement est selon l'invention constitué de méthyl-2 imidazole, de méthyl-1 imidazole, de phényl-2 imidazole, d'isopropyl-2 imidazole ou d'imidazole, utilisé en quantité égale au plus à 0,3 % en poids et de préférence inférieur à 0,15 % en poids par rapport au poids de la résine polyster carboxylé.

Selon une caractéristique importante du procédé de l'invention le catalyseur de durcissement et l'accélérateur de durcissement sont ajoutés au mélange résine polyester carboxylé-résine époxy. On a en effet trouvé qu'en opérant dans ces conditions on obtenait un revêtement qui peut être thermodurçi à plus faible température, pendant une durée plus faible. Un tel procédé permet de ce fait d'obtenir des revêtements en poudre qui ne sont pas colorés et présentent un bel aspect de surface.

Les polyesters carboxylés mis en oeuvre selon l'invention sont fabriqués en utilisant tous les produits de départ connus pour la fabrication des polyesters carboxylés. De façon avantageuse ces polyesters carboxylés sont fabriqués en utilisant en plus un agent assouplissant connu, par exemple l'acide adipique employé en quantité au plus égale à 15 % en poids par rapport à l'ensemble de tous les autres ingrédients utilisés pour la fabrication des polyesters carboxylés. Les ingrédients qui entrent dans la fabrication des polyesters caboxylés utilisés pour la mise en oeuvre du procédé de l'invention sont de façon connue choisis parmi au moins un polyol avec un ou plusieurs acides ou anhydrides polycarboxyliques saturés. Comme polyols utilisés, on peut citer l'éthylène-glycol, le néopentylglycol, le propylène-glycol, le di-propylène-glycol, le 1,4 - cyclohexane-diméthanol, le triméthylolpropane, le di-éthylène-glycol, le butane-diol-1,4, le tri-méthylol-propane, le pentaerytritol, le bis-phénol-A propyloxy éthylène ou oxypropylène. Comme acides ou anhydrides polycarboxyliques saturés on peut citer l'acide téréphtalique, l'anhydride trimellitique, isophtalique, tetrahydrophtalique, hexahydrophtalique ou succinique.

Les résines époxy utilisées pour la mise en oeuvre du procédé conforme à l'invention sont des résines connues préparées par exemple à partir de bis-phénol A et d'épichlorhydrine. On utilise des résines solides de préférence ayant un poids moléculaire compris entre 1 000 et 2 000, un équivalent époxy compris entre 500 et 1 000.

Les résines polyester carboxylé qui conviennent plus particulièrement pour la mise en oeuvre du procédé de l'invention sont choisies parmi celles qui présentent un indice d'acide de préférence compris entre 60 et 120 et un point de ramollissement compris entre 80 et 120°C la mise en oeuvre de résines présentant un point de ramollissement supérieur à 120°C provoque des problèmes à l'extrusion car la résine polyester et la résine époxy ne présentent pas la même viscosité, la mise en oeuvre de résine polyester carboxylé présentant un point de ramollissement inférieur à 80°C conduit à des phénomènes de reprise en masse ce qui provoque des mises en oeuvre difficiles.

Pour la mise en oeuvre du procédé conforme à l'invention, on utilise un rapport pondéral du composé époxy au composé polyester carboxylé compris entre 0,6 et 1,5 et de préférence voisin de 1.

Les compositions de revêtements obtenues selon le procédé de l'invention peuvent contenir des additifs connus, tels qu'agent d'étalement, charges, pigment, agent de résistance aux intempéries etc... Les compositions sont préparées de façon classique en mélangeant à sec la résine époxy et la résine polyester carboxylé contenant le catalyseur de durcissement et l'accélérateur et les additifs éventuels sur un broyeur ou un mélangeur par exemple, puis on homogénéise le mélange à chaud sur un malaxeur muni d'une vis de rotation. Après refroidissement le produit obtenu est concassé micronisé à l'aide d'un broyeur puis tamisé. Les compositions en poudre obtenues peuvent être appliquées à divers articles par un procédé classique, tel que revêtement en lit fluidisé, revêtement par projection électrostatique ou par pistolage.

Les exemples suivants illustrent la présente invention.

**Exemple 1**

Dans un réacteur muni d'un agitateur, d'un thermomètre et d'une colonne thermostatée on introduit:

| | |
|---|---|
| 124 | parties d'éthylène glycol |
| 1 872 | parties de néopentyl glycol |
| 272 | parties de 1,4 cyclohexane diméthanol |
| 134 | parties de trimethylol-propane |
| 3 320 | parties d'acide terephtalique |
| 292 | parties d'acide adipique |
| 6,63 | parties d'un sel d'étain vendu sous la marque FASCAT par la |

Société M.T.: ce sel est un catalyseur d'estérification.

On fait réagir le mélange réactionnel pendant 10 heures jusqu'à une température de 250°C.
Après refroidissement à 190°C on introduit dans le réacteur:

| | |
|---|---|
| 18 | partie d'acétate de lithium |
| 615 | parties d'anhydride trimellitique. |

On laisse le mélange réactionnel se stabiliser à 180°C pendant 1 heure puis on ajoute 6 parties de méthyl-2 imidazole le mélange réactionnel est maintenu à cette température pendant 20 minutes.
On obtient une résine polyester carboxylé qui présente les caractéristiques suivantes:

Indice d'acide: 80
Indice d'hydroxyle: 3
Point de ramollissement: 111°C.

50 parties en poids de la résine polyester carboxylé obtenue sont mélangées à 50 parties en poids d'une résine époxy solide fabriquée à partir de bis-phénol A et d'épichlorhydrine: cette résine époxy présente un poids moléculaire de 1 770, un équivalent époxy de 810, un indice époxy de 0,128. Au mélange de résines on ajoute 0,36 partie d'un agent d'écoulement (vendu sous la marque MODAFLOW par la Société MONSANTO), et 66,66 parties d'oxyde de titane.

Les ingrédients sont mélangés à sec sur un mélangeur à rouleaux pendant 15 minutes puis homogénéisés à l'état fondu sur un KO-malaxeur de la Société BUSS. Après refroidissement le produit est concassé et micronisé dans un broyeur puis tamisé pour éliminer la fraction supérieure à 100 microns.

On applique la composition de revêtement sur des tôles métalliques dégraissées à l'aide d'un pistolet pour obtenir un film de 50 à 70 microns d'épaisseur. Les propriétés du revêtement sont résumées dans le tableau 1.

## Exemple 2

L'exemple 1 est répété mais en mettant en 248 parties d'éthylène-glycol, au lieu de 124, 438 parties d'acide adipique au lieu de 292 et 9 parties de methyl-2 imidazole au lieu de 6.

On obtient une résine polyester carboxylé qui présente les caractéristiques suivantes:

Indice d'acide: 70
Indice d'hydroxyle: 28
Point de ramollissement: 96°C

Cette résine polyester carboxylé est ensuite mélangée avec les mêmes ingrédients utilisés dans l'exemple 1. On obtient un film dont les propriétés sont résumées dans le tableau 1.

## Exemple 3

L'exemple 2 est répété mais en utilisant 692 parties d'anhydride trimellitique au lieu de 615 et 6 parties de méthyl-2 imidazole au lieu de 9 parties.

On obtient une résine polyester carboxylé qui présente les caractéristiques suivantes:

Indice d'acide: 85,8
Indice d'hydroxyle: 1,8
Point de ramollissement: 103°C
Cette résine polyester carboxylé est ensuite mélangée avec les mêmes ingrédients utilisés dans l'exemple 1. On obtient un film dont les propriétés sont resumées dans le tableau 1.

## Exemple 4

On réalise à titre comparatif la série d'essais suivants:
a. On prépare une résine polyester carboxylé selon l'exemple 1 à partir des ingrédients suivants:

| | |
|---|---|
| 2 318 | parties de propylène glycol |
| 3 735 | parties d'acide isophtalique |
| 365 | parties d'acide adipique |
| 7,4 | parties du même sel d'étain utilisé dans l'exemple 1. |

Après reaction seion le mode opératoire décrit dans l'exemple on ajoute après refroidissement 960 parties d'anhydride trimellitique.

On obtient une résine polyester qui présente les caractéristiques suivantes:

Indice d'acide: 84
Indice d'hydroxyle: 24
Point de ramollissement: 93°C

Cette résine polyester carboxylé est ensuite mélangée avec les mêmes ingrédients utilisés dans l'exemple 1.

4

On obtient un film dont les propriétés sont résumées dans le tableau 2.

b. La résine polyester carboxylé obtenue dans l'exemple 4a est utilisée pour fabriquer un film avant la fabrication du film on ajoute au mélange en poudre: polyester carboxylé résine époxy, 9 parties de méthyl-2 imidazole. Les propriétés du film obtenu sont résumées dans le tableau 2.

c. L'exemple 4b est répété mais en remplaçant la méthyl-2 imidazole par 18 parties d'acétate de lithium. Les propriétés du film obtenu sont résumées dans le tableau 2.

**Tableau 1**

| Normes | Exemple | 1 | 2 | 3 |
|---|---|---|---|---|
| | Cuisson | | | |
| | Température (°C) | 180 | 180 | 180 |
| | Temps (minutes) | 25 | 25 | 23 |
| NFT 30124 | Epaisseur (microns) | 66 | 60 | 64 |
| NFT 30019 | Emboutissage (mm) | 10 | > 10 | > 10 |
| ASTM D 523 | Brillance % à 60°C | 95 | 93 | 97 |
| ASTM D 2794 | Choc Ø 12 mm | 74 | 74 | 74 |
| ASTM D 2794 | (Kg/cm) Ø 16 mm | 200 | 150 | 200 |
| NFT 30039 | Touzart Ø 25 mm | > 50 | > 50 | > 50 |
| NFT 30040 | Pliage du mandrin de 5 mm de diamètre | pas de fissure | pas de fissure | pas de fissure |
| | Temps de gel à 180°C (secondes) | 225 | 311 | 227 |

**Tableau 2**

| Normes | Exemple | 4a | 4b | 4c |
|---|---|---|---|---|
| | Cuisson | | | |
| | Température (°C) | 180 | 180 | 180 |
| | Temps (minutes) | 25 | 20 | 20 |
| NFT 30124 | Epaisseur (microns) | 66 | 60 | 60 |
| NFT 30019 | Emboutissage (mm) | 0,9 | 6,8 | 1,1 |
| ASTM D 523 | Brillance % à 60°C | > 100 | 92 | 92 |
| ASTM D 2794 | Choc Ø 12 mm | 0 | 0 | 0 |
| ASTM D 2794 | (Kg/cm) Ø 16 mm | 0 | 0 | 0 |
| NFT 30039 | Touzart Ø 25 mm | 0 | < 5 | 0 |
| NFT 30040 | Pliage du mandrin de 5 mm de diamètre | fissure | pas de fissure | fissure |
| | Temps de gel à 180°C (secondes) | 13 minutes | 120 | 330 |

**Exemple 5**

Selon un mode opératoire identique à celui de l'exemple de la demande, on prépare un polyester carboxylé qui présente les caractéristiques suivantes:

- Indice d'acide: 63,5

- Indice d'hydroxyle: 2,5
- Point de ramollissement: 113° C

A 50 parties en poids de la résine polyester ainsi obtenue on ajoute divers catalyseurs en quantité variable et 0,15 partie en poids de méthyl-2 imidazole, 50 parties en poids de la résine polyester carboxylé obtenue sont mélangées à 50 parties en poids de la même résine époxy utilisé dans l'exemple 1 de la demande ainsi qu'avec 1,2 partie en poids du même agent d'écoulement et 50 parties en poids d'oxyde de titane utilisées dans l'exemple 1 de la demande.

Après application au pistolet on obtient des revêtements dont les caractéristiques sont résumées dans le tableau 3. Les quantités de catalyseur sont exprimées en 96 % par rapport au poids de la resine.

| Normes | Proprietes | Nature du catalyseur | | |
| --- | --- | --- | --- | --- |
| | | Acétate de Zinc 0,10 % | Acétate de magnésium 0,26 % | Bromure de tétra éthyl-ammonium 0,1 |
| | Cuisson Température (°C) | 200 | 200 | 200 |
| | Temps (minutes) | 20 | 20 | 20 |
| NFT 30124 | Epaisseur (microns) | 55 | 64 | 64 |
| NFT 30019 | Emboutissage (mm) | 9,2 | 9,2 | 9,2 |
| ASTM D 523 | Brillance % (60°) | 85 | 84 | 82 |
| ASTM D 2794 | Choc bille Ø 16 (kg-cm) | 120 | 160 | 80 |
| NFT 30039 | Choc Touzart Ø 25 (kg-cm) | ⩾ 50 | ⩾ 50 | ⩾ 50 |
| NFT 30040 | Pliage sur mandrin 5 mm | BON | BON | BON |
| | Temps de gel à 180° C (secondes) | 97 | 95 | 75 |

## Exemple 6

L'exemple 4 est répété mais en utilisant uniquement l'acétate de lithium comme catalyseur utilisé en même quantité que dans l'exemple et en mettant en oeuvre divers imidazoles utilisés à raison de 0,1 partie pour 100 parties du mélange de résines.

Le tableau 4 indique les caractéristiques des revêtements obtenus.

Les propriétés sont exprimées selon les mêmes normes indiquées dans le tableau 1

| Nature de l'accelerateur | Méthyl-2 Imidazole | Méthyl-1 Imidazole | Phényl-2 Imidazole | Isopropyl-2 misazole | Imidazole |
| --- | --- | --- | --- | --- | --- |
| Cuisson Température (°C) | 180 | 180 | 180 | 180 | 180 |
| Temps (minutes) | 20 | 20 | 20 | 20 | 20 |
| Epaisseur (microns) | 40 | 41 | 40 | 45 | 50 |
| Emboutissage (mm) | 10 | 9,8 | 9,5 | 9,5 | 9,2 |
| Brillance % (60° C) | 96 | 99 | 98 | 98 | 97 |
| Choc bille Ø 16 (Kg-cm) | 200 | 180 | 200 | 150 | 150 |
| Choc Touzart Ø 25 (Kg-cm) | ⩾ 50 | ⩾ 50 | ⩾ 50 | ⩾ 20 | ⩾ 40 |
| Pliage sur mandrin 5 mm | BON | BON | BON | BON | BON |
| Temps de gel à 180° C (secondes) | 225 | 250 | 205 | 233 | 237 |

**EP 0 194 904 B1**

**Revendications**

1. Procédé de fabrication d'une composition de revêtement en poudre durcissable à chaud constitué d'un mélange de résine époxyde et de résine polyester, d'un catalyseur de durcissement et d'un accélérateur de durcissement caractérisé en ce que la composition est fabriquée par melange de la résine polyester carboxylé contenant le catalyseur de durcissement et l'accélérateur de durcissement du système résine époxy-résine polyester le mélange étant durçi à chaud, le catalyseur additionné préalablement à la résine polyester carboxylé étant constitué d'acétate de lithium, d'acétate de zinc, d'acétate de magnésium ou de bromure de trétraéthyl-ammonium utilisé seul ou en mélange, l'accélérateur additionné préalablement à la résine polyester carboxylé étant constitué de méthyl-2 imidazole, de méthyl-1 imidazole, de phényl-2 imidazole, d'isopropyl-2 imidazole ou d'imidazole.

2. Procédé selon 1 caractérisé en ce que la quantité de catalyseur de durcissement utilisé dans la résine polyester carboxylé est au plus égale à 2,2 % en poids par rapport au poids de la résine polyester carboxylé, la quantité d'accélérateur de durcissement étant au plus égale à 0,3 % en poids par rapport au poids de la résine polyester carboxylé.

3. Procédé selon 1 et 2 caractérisé en ce que le catalyseur de durcissement est utilisé en quantité de préférence inférieure à 0,8 % en poids et l'accélérateur de durcissement est utilisé en quantité de préférence inférieure à 0,15 % en poids par rapport au poids de la résine polyester carboxylé.

**Patentansprüche**

1. Verfahren zur Herstellung einer pulverförmigen wärmehärtbaren Beschichtungs-Zusammensetzung bestehend aus einem Gemisch eines Epoxidharzes und eines Polyesterharzes, eines Härtungskatalysators und eines Härtungsbeschleunigers,
dadurch gekennzeichnet, daß die Zusammensetzung hergestellt wird durch Mischung des carboxylierten Polyersterharzes enthaltend den Härtungskatalysator und den Härtungsbeschleuniger für das System Epoxyharz-Polyesterharz, wobei das Gemisch in der Warme gehärtet wird, wobei der vorab zu dem carboxylierten Polyesterharz zugegebene Katalysator aus Lithiumacetat, Zinkacetat, Magnesiumacetat oder Tetraethylammoniumbromid besteht, die für sich oder im Gemisch verwendet werden, und wobei der dem carboxylierten Polyesterharz vorab zugegebene Beschleuniger aus 2-Methylimidazol, 1-Methylimidazol, 2-Phenylimidazol, 2-Isopropylimidazol oder Imidazol besteht.

2. Verfahren nach Anspruch 1, dadurch gekennzeichnet, daß die Menge des in dem carboxylierten Polyesterharz eingesetzten Härtungskatalysators höchstens 2,2 Gew.-% bezogen auf das Gewicht des carboxylierten Polyesterharzes beträgt und die Menge des Härtungsbeschleinnigers höchstens 0,3 Gew.-% bezogen auf das Gewicht des carboxylierten Polyesterharzes beträgt.

3. Verfahren nach Anspruch 1 und 2, dadurch gekennzeichnet, daß der Härtungskatalysator in einer Menge von vorzugsweise weniger als 0,8 Gew.-% und der Härtungsbeschleuniger in einer Menge von vorzugsweise weniger als 0,15 Gew.-% bezogen auf das Gewicht des carboxylierten Polyesterharzes verwendet werden.

**Claims**

1. Process for the manufacture of a powder coating composition which can be cured hot, consisting of a mixture of epoxide resin and of polyester resin, of a cure catalyst and of a cure accelerator, characterized in that the composition is manufactured by mixing the carboxylated polyester resin containing the cure catalyst and the cure accelerator for the epoxy resin-polyester resin system, the mixture being cured hot, the catalyst added beforehand to the carboxylated polyester resin consisting of lithium acetate, zinc acetate, magnesium acetate or tetraethylammonium bromide employed by itself or in a mixture, the accelerator added beforehand to the carboxylated polyester resin consisting of 2-methylimidazole, 1-methylimidazole, 2-phenylimidazole, 2-isopropylimidazole or imidazole.

2. Process according to 1, characterized in that the quantity of cure catalyst employed in the carboxylated polyester resin does not exceed 2.2 % by weight relative to the weight of the carboxylated polyester resin, the quantity of cure accelerator not exceeding 0.3 % by weight relative to the weight of the carboxylated polyester resin.

3. Process according to 1 and 2, characterized in that the cure catalyst is employed in a quantity preferably below 0.8 % and the cure accelerator is employed in a quantity preferably below 0.15 % by weight relative to the weight of the carboxylated polyester resin.

7